# EUROPÄISCHE PATENTANMELDUNG

(11) **EP 0 598 331 A1**
(43) Veröffentlichungstag der Anmeldung: **25.05.1994**
(21) Anmeldenummer: 93118256.2
(22) Anmeldetag: 11.11.1993
(51) Int. Cl.: F16L 47/06, F16L 21/03, E03F 3/04

(54) **Steckmuffenverbindung**

(30) Priorität: 14.11.1992 DE 9215544 U
(71) Anmelder: GEBRÜDER OSTENDORF KUNSTSTOFFE GmbH & Co. KG, D-49377 Vechta (DE)
(72) Erfinder: Lüers, Gregor, D-49424 Goldenstedt-Lutten (DE)
(74) Vertreter: Meyer, Ludgerus A., Dipl.-Ing.

(57) **Zusammenfassung**

Die Erfindung betrifft eine Steckmuffenverbindung, insbesondere für Kunststoffrohre, bei der das Spitzende eines ersten glatten Rohres (2) in das aufgeweitete sickenfreie Muffenende (3, 13) eines zweiten Rohres (4, 17) eingesteckt ist und in den Zwischenraum zwischen den Rohrenden eine Dichtung (5, 14) eingesetzt ist. Die Dichtung (5, 14) erstreckt sich im wesentlichen über die gesamte Länge, über die die zusammengesteckten Rohre ineinandergreifen.

## Beschreibung

Die Erfindung betrifft eine Steckmuffenverbindung mit einer Dichtung zum Einlegen in eine Rohrmuffe oder ein Fitting, insbesondere für Kunststoffabwasserrohre.

Bekannte Dichtungen der vorliegenden Art sind vorwiegend als Schnurdichtungen oder O-Ringe ausgebildet. Sie werden bis zur Verlegung der Rohre bzw. Fittings lose mitgeführt und erst unmittelbar vor dem Zusammensetzen der genannten Bauteile zu Teilen von Abwasserleitungen usw. in Ringrillen eingelegt. Da O-Dichtungen entsprechenden Durchmessers auf den Baustellen oftmals nicht zur Hand sind, werden diese Dichtungen häufig nicht in die Rohre eingesetzt, so daß die fertig verlegten Abwasserrohre lecken können. Zudem werden vorwiegend verhältnismäßig weiche Dichtungen verwendet. Diese passen sich häufig nicht ausreichend in die Ringrille ein, d.h. sie treten schon vor dem Einführen des Spitzendes eines Rohres in die mit der Ringrille versehenen Muffe ganz oder teilweise aus der Ringrille aus. Dadurch wird das Zusammenstecken von Rohrende und Muffe behindert und mühsam, bzw. es kommt vor, daß die Dichtung durch das eingeführte Rohr in die Muffe hineingeschoben wird, ohne zur Anlage auf der Rohraußenseite zu kommen, auch dadurch kommt es häufig zu einem Lecken der Abwasserrohre. Da die Abwasserrohre und auch die passenden Fittings nach bestimmten Normen hergestellt werden, sind auch die Abmessungen der Ringrillen zumindest hinsichtlich der Mindestgrößen festgelegt.

Es ist auch schon bekannt, den Dichtring bereits unmittelbar nach der Herstellung von Rohren in der Rille festzulegen und somit Rohre zur Verfügung zu haben, die nur noch auf der Baustelle ineinander gesetzt werden müssen.

Bei Einsatz derartiger Dichtungen in besonders schallgedämpften Rohrleitungen ist allerdings keine ausreichende Schalldämpfung erreichbar. Durch punktuelle Anlageflächen der Rohre besteht die Gefahr der Schallübertragung, so daß der Einsatz derartiger Dichtungen für hohe Schallschutzansprüche nicht empfehlenswert ist.

Der Erfindung liegt daher die Aufgabe zugrunde, eine Steckmuffenverbindung, insbesondere für Kunststoffabwasserrohre, vorzusehen, deren Muffenabdichtung in Abwasserrohrsysteme fest und unverlierbar eingesetzt werden kann und hohe Schalldämpfungseigenschaften aufweist.

Diese Aufgabe wird durch die in Anspruch 1 angegebenen Merkmale gelöst.

Die Erfindung betrifft im wesentlichen eine Steckmuffenverbindung, bei der die Muffe an ein Rohr nachträglich angeformt wurde und bei der sich die eingesetzte Dichtung im wesentlichen über die gesamte Länge der sickenfreien Muffe erstreckt. Eine derart ausgebildete Dichtung kann problemlos so ausgeformt werden, daß sie den Abmessungen der Muffe entspricht und ist somit ohne weiteres formschlüssig in die Muffe einsetzbar. Somit sind Dichtungen direkt bei der Herstellung derartiger Abwasserrohre praktisch unverlierbar in die Muffe einsetzbar und die Abwasserrohre stehen für die problemlose Verarbeitung am Einsatzort zur Verfügung. Wird das Spitzende eines zweiten glatten Rohres in die Muffe des Rohres mit der eingesetzten Dichtung eingeschoben, ergibt sich vorteilhaft, daß der Halt der Rohre untereinander durch die breite Ausformung der Dichtung besonders sicher ist.

Die Muffe ist insbesondere zweistufig ausgebildet, wobei eine erste Stufe sich nahezu über die gesamte Länge der Muffe erstreckt und eine zweite endseitige Stufe mit größerem Durchmesser zur Aufnahme eines verdickten Endes der Dichtung vorgesehen ist. Hierdurch wird eine vollständige akustische Isolierung der Steckmuffenverbindung erreicht, wobei gleichzeitig ein sicheres Einführen des einzusteckenden Rohres gewährleistet ist. Durch die vorderseitige Aufweitung liegt die Dichtung sicher in der Muffe und kann nicht zusammengeschoben oder -gepreßt werden, wenn das Spitzende des zweiten Rohres eingeführt wird. Durch die Aufweitung und die innere Abschrägung vom Durchmesser der Aufweitung zum Durchmesser der übrigen Dichtung wird außerdem das Einführen des Spitzendes eines zweiten Rohres erleichtert, da nicht die Gefahr besteht, daß das Spitzende mit dem Beginn der Dichtung verkantet. Bei einer zweckmäßigen Weiterbildung ist vorgesehen, daß der äußere Durchmesser der Dichtung dem inneren Durchmesser der Muffe vollständig angepaßt ist. Die erfindungsgemäß verwendeten Dichtungen sind bei stets gleicher Raumformausbildung bei jedem genormten Abwasserrohr verwendbar.

Die Dichtung ist vorteilhaft aus elastomerem Material als Vollprofil ausgebildet. Die Verwendung von Gummi ist besonders vorteilhaft, weil dieser Werkstoff bereits bei seiner Herstellung leicht auf gewünschte Eigenschaften eingestellt werden kann, so daß sowohl eine ausreichend kräftige Federwirkung als auch Bruchfestigkeit, z. B. bei hohen Verformungen als materialspezifische Eigenschaft erreichbar ist.

Die Steckmuffenverbindung zeichnet sich die gemäß der Erfindung dadurch aus, daß sie jeden möglichen Verbindungspunkt zwischen zwei Rohren akustisch isoliert. Dadurch ist sie besonders für Rohrleitungen einsetzbar, die hohe Ansprüche an die Schalldämpfung haben, da keine Schallübertragung von einem Rohr auf das andere stattfinden kann. In einer bevorzugten Ausführungsform weist das dem Muffenspiegel zugewandte Ende der Dichtung einen nach innen vorspringenden Ansatz auf, dessen Innendurchmesser im wesentlichen dem Innendurchmesser des Spitzendes des in die Muffe eingesteckten ersten Rohres entspricht. Durch diesen Ansatz wird verhindert, daß das Spitzende eines Rohres mit dem sich verjüngenden Teil einer Muffe eines zweiten Rohres in Kontakt tritt, denn zwischen dem äußeren Ende des Spitzendes und der sich verjüngenden Muffe befindet sich der vorspringende Absatz.

Es kann auch vorgesehen sein, daß die Wandstärke der Dichtung kleiner als der Spaltabstand zwischen Innenwand der Muffe und Außenwand des eingesteckten Rohres gebildet ist. Die Dichtung weist dabei mehrere beidseitige Lippen auf, die die Abdichtung bewirken. Trotz nur punktueller ringförmiger Abdichtung wird eine Schallübertragung gleichwohl wirksam verhindert. Dabei kann jedoch die Einsteckkraft reduziert und eine Materialersparnis in der Dichtung erzielt werden.

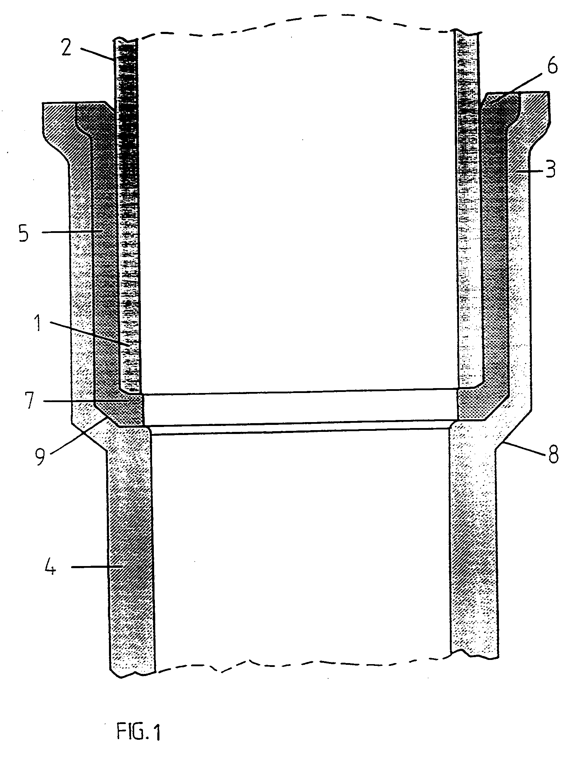

Eine bevorzugte Ausführungsform der Erfindung wird im einzelnen durch die nachfolgenden Figuren dargestellt, wobei
- Fig. 1: einen Schnitt durch die Verbindung der Rohrmuffe eines Kunststoffabwasserrohres mit dem Spitzende eines zweiten Rohres, in die eine Dichtung eingesetzt ist, zeigt,
- Fig. 2: eine Ausschnittsvergrößerung der Verbindung gemäß Fig. 1 im zeigt,
- Fig. 3: einen Querschnitt durch die Verbindung entlang der Linie A-A (Fig. 2) zeigt und
- Fig. 4: eine Querschnitt einer verbesserten Ausführungsform zeigt.

Wenn das Spitzende 1 eines ersten Rohres 2 in eine Muffe 3 eines zweiten Rohres 4 eingebracht wird, ist in der Regel eine Dichtung 5 nötig, um die Verbindung zwischen den Rohren 2, 4 abzudichten. Die Dichtung 5 der vorliegenden Erfindung ertreckt sich im wesentlichen über die gesamte Länge, über die die zusammengesetzten Rohre 2, 4 ineinandergreifen. An dem Ende der Dichtung 5, das dem vorderen Teil der Muffe 3 zugewandt ist, bildet sie eine Aufweitung 6, die einer Aufweitung des vorderen Teils der Muffe 3 folgt, so daß die Dichtung 5 eng an der Muffe 3 anliegt. Die Aufweitung 6 weist einen größeren Innen- und Außendurchmesser auf als entlang der übrigen Dichtungslänge. Die Aufweitung 6 wird durch eine Abschrägung zu dem geringeren Durchmesser der restlichen Dichtung 5 geführt, so daß das dem vorderen Ende der Muffe 3 zugewandte Ende nicht mit dem vorderen Teil eines Spitzendes 1 eines Rohres 2 verkanten kann, wenn das Spitzende 1 in die Muffe 3 eingeführt wird. Zudem wird verhindert, daß die Dichtung 5 während desselben Vorgangs zusammengeschoben oder zusammengepreßt wird.

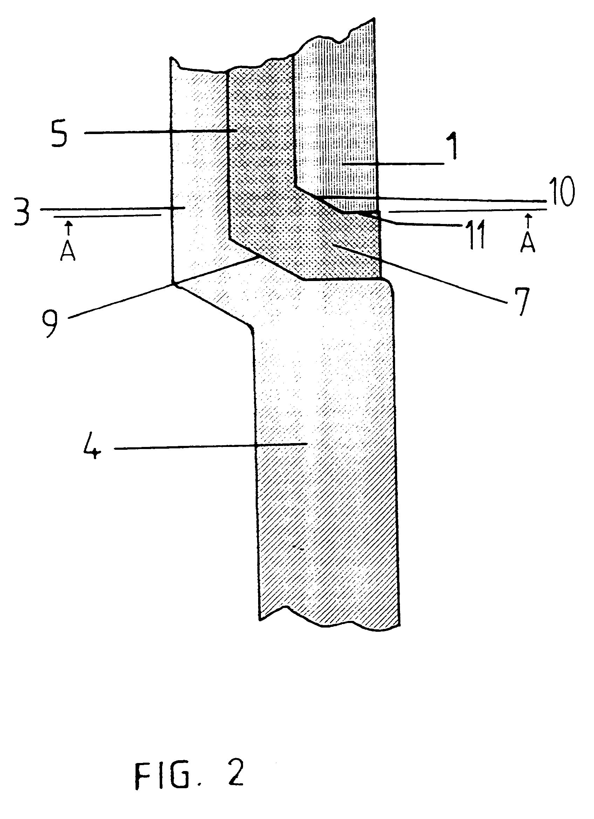

Dies wird außerdem durch die Ausbildung eines vorspringenden Ansatzes 7 (Fig. 2) an dem Ende der Dichtung 5 verhindert, das dem Muffenspiegel zugewandt ist. Der Innendurchmesser des Ansatzes 7 entspricht im wesentlichen dem Innendurchmesser des in die Muffe 3 eingesteckten Spitzendes 1 eines ersten Rohres 2. Der Ansatz 7 entsteht durch Abschrägungen 9, 10 der Dichtung 5, die der Verjüngung 8 der Muffe 3 des zweiten Rohres 4 folgt, wodurch die Dichtung 5 mit ihrem Absatz 7 auf dem durch die Verjüngung 8 gebildete Muffenspiegel aufliegt. Hierdurch wird verhindert, daß das Spitzende 1 eines ersten Rohres 2 mit dem Muffenspiegel der Muffe 3 des zweiten Rohres 4 in Berührung kommt. Stattdessen entsteht eine Anstoßkante 11 zwischen Spitzende 1 und Dichtung 5. Eine Schallübertragung zwischen dem Spitzende 1 des ersten Rohres 2 und der Muffe 3 des zweiten Rohres 4 wird auf diese Weise verhindert.

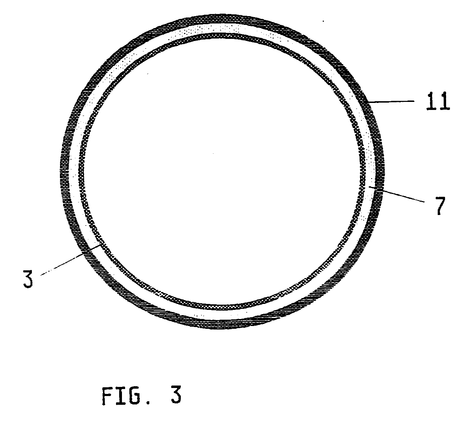

Fig. 3 zeigt einen Querschnitt durch die Dichtung 5 entlang der Schnittkanten A-A gemäß Fig. 2 zwischen Spitzende 1 und Dichtung 5.

Eine derart ausgebildete Dichtung kann formschlüssig in die Muffe eines Rohres eingesetzt werden, sitzt dort durch ihre breite Ausformung besonders sicher und verbessert den Halt von Spitzende und Muffe eineinander. Jeder mögliche Verbindungspunkt zwischen den zwei Rohren ist abgedeckt, wodurch die Dichtung besonders in Rohrleitungen einsetzbar ist, die hohe Ansprüche an die Schalldämpfung haben. Durch die Verwendung eines elastomeren Materials als Vollprofil wird die schalldämpfende Wirkung noch erhöht.

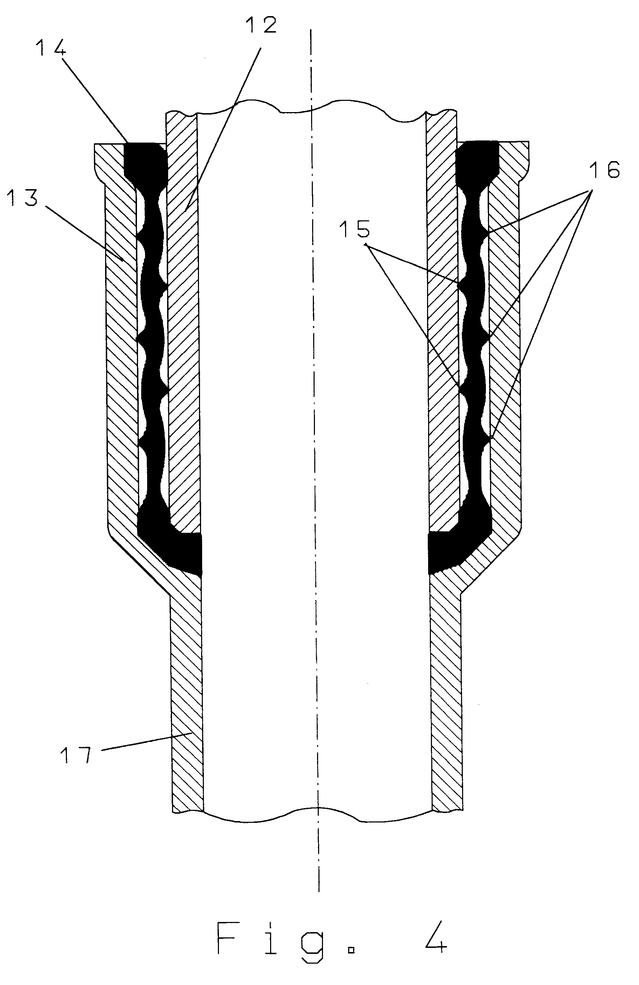

In Fig. 4 ist eine Weiterbildung der Erfindung dargestellt. Die Dichtung 14 weist in diesem Fall in ihrem mittleren Bereich eine Wandstärke auf, die kleiner als der Spaltabstand zwischen Innendurchmesser der Muffe 13 des Rohres 17 und dem Außendurchmesser des eingeschobenen Spitzendes 12 ist. Es sind mehrere ringförmige um die Dichtung umlaufende Lippen 15, 16 vorgesehen, die die notwendige Abdichtung bewirken. Die äußeren Lippen 16 liegen dabei etwa mittig zwischen den inneren Lippen 15, so daß die Dichtungswand der Dichtung 14 eine etwa mäanderförmige Kontur einnimmt.

### Bezugszeichenliste

- 1: Spitzende
- 2: erstes Rohr
- 3: Muffe
- 4: zweites Rohr
- 5: Dichtung
- 6: Aufweitung
- 7: Ansatz
- 8: Verjüngung
- 9: Abschrägung
- 10: Abschrägung
- 11: Anstoßkante
- 12: Spitzende
- 13: Muffe
- 14: Dichtung
- 15: Lippen
- 16: Lippen
- 17: Rohr

## Patentansprüche

1. Steckmuffenverbindung, insbesondere für Kunststoffrohre, bei der das glatte Spitzende (1, 12) eines ersten Rohres (2) in das aufgeweitete Muffenende (3, 13) eines zweiten Rohres (4, 17) eingesteckt ist und in den Zwischenraum zwischen den Rohrenden eine Dichtung (5, 14) eingesetzt ist, dadurch gekennzeichnet, daß die Dichtung (5, 14) sich im wesentlichen über die gesamte Länge der sickenfreien Muffe erstreckt, über die die zusammengesteckten Rohre ineinandergreifen.

2. Steckmuffenverbindung nach Anspruch 1, dadurch gekennzeichnet, daß die Muffe (3, 13) durch zweistufige endseitige Aufweitung eines zylindrischen Rohres hergestellt ist, wobei eine erste Stufe sich nahezu über die gesamte Länge der Muffe erstreckt und eine zweite endseitige Stufe mit größerem Durchmesser zur Aufnahme eines verdickten Endes der Dichtung vorgesehen ist.

3. Steckmuffenverbindung nach einem oder mehreren der vorhergehenden Ansprüche, dadurch gekennzeichnet, daß der äußere Durchmesser der Dichtung (5, 14) der Form der Muffe (3, 13) angepaßt ist.

4. Steckmuffenverbindung nach Anspruch 1, dadurch gekennzeichnet, daß die Dichtung (5, 14) aus elastomerem Material als Vollprofil ausgebildet ist.

5. Steckmuffenverbindung nach Anspruch 1, 2 oder 3, dadurch gekennzeichnet, daß das dem Muffenspiegel zugewandte Ende der Dichtung (5, 14) einen nach innen vorspringenden Ansatz (7) aufweist, dessen Innendurchmesser im wesentlichen dem Innendurchmesser des Spitzendes (1, 12) des in die Muffe (3, 13) eingesteckten ersten Rohres (2) entspricht.

6. Steckmuffenverbindung nach einem oder mehreren der vorhergehenden Ansprüche, dadurch gekennzeichnet, daß um den Dichtungsaußenumfang mehrere ringförmige Dichtlippen (16) vorgesehen sind, die mit Abstand zueinander entlang der axialen Länge der Dichtung (14) verteilt sind, daß außerdem am Dichtungsinnenumfang mehrere ringförmige Dichtlippen (15) vorgesehen sind, die mit Abstand zueinander entlang der axialen Länge der Dichtung (14) verteilt sind, und daß der axiale Ort der jeweiligen um den Außenumfang der Dichtung verteilten Dichtlippen (16) jeweils zwischen dem axialen Ort der jeweiligen am Innenumfang der Dichtung angeordneten Dichtlippen (15) vorgesehen ist, wobei die Mantelstärke der Dichtung (14) außerhalb des Ortes einer Dichtlippe (15, 16) geringer als die Durchmesserdifferenz zwischen Innendurchmesser der Muffe (13) und dem Außendurchmesser des Spitzendes (12) eines eingesteckten Rohres (17) ist.
